# EUROPEAN PATENT SPECIFICATION

(11) **EP 4 235 524 B1**
(45) Date of publication and mention of the grant of the patent: **24.06.2026**
(21) Application number: 23173239.7
(22) Date of filing: 22.09.2021
(51) Int. Cl.: G02B 6/255, G02B 6/54, G06F 1/26, G06F 1/28, G06F 1/329, G06F 9/50, G06Q 10/04, G06Q 10/0631, G06N 20/00, G06Q 10/0633, G06Q 30/0201, G06Q 50/06

(54) **ORCHESTRATING DATACENTER WORKLOADS BASED ON ENERGY FORECASTS**
ORCHESTRIERUNG VON RECHENZENTRUMSARBEITSLASTEN AUF DER BASIS VON ENERGIEVORHERSAGEN
ORCHESTRATION DE CHARGES DE TRAVAIL DE CENTRE DE DONNÉES SUR LA BASE DE PRÉVISIONS ÉNERGÉTIQUES

(30) Priority: 23.09.2020 US 202063082075 P
(43) Date of publication of application: 30.08.2023
(62) Divisional of application: 21873311.1
(73) Proprietor: Quantum Loophole, Inc., Austin, TX 78701 (US)
(72) Inventor: NOTEBOOM, Scott, Austin, 78701 (US); SNOWHORN, Josh, Austin, 78701 (US); PAUL-HUS, Richard, Austin, 78701 (US); CANEKERATNE, Shane, Austin, 78701 (US)
(74) Representative: Bartholomew, Anna

(56) References cited:
- US-A1- 2007 297 744

## Description

### TECHNICAL FIELD

Various embodiments of the present technology generally relate to a fiber-optic bundle coupling apparatus.

### BACKGROUND

The rise in virtual computing has evolved how computing services are rendered, how applications and infrastructures are built, and how data traverses through the Internet. Cloud computing refers to using dynamic and scalable compute resources accessible via the Internet. Datacenter operators can provide available compute resources to perform services, large or small, to public, private, or hybrid cloud customers.

Cloud computing, however, remains an expensive endeavor requiring large amounts of land, cable, time, and more. While datacenter operators have the ability to evaluate a capacity to take on compute jobs and re-route compute jobs accordingly, at present, there are no readily applicable solutions that can account for real-time energy usage, available renewable and non-renewable energy sources, potential weather impacts to a compute schedule, and other demands on datacenters. Thus, what is needed is an orchestration engine capable of ingesting machine learning outputs to analyze energy, specifically renewable energy, and cloud supply and demand to create an optimization plan.

US 2007/297744 A1 discloses a fiber-optic bundle coupling apparatus for enclosing and protecting spliced ends of fiber-optic cables.

### OVERVIEW

Fiber-optic cables may comprise at least one hundred thousand strands of cable spliced together and connected by a coupling device. According to the invention, there is provided a fiber-optic bundle coupling apparatus as defined in the appended independent claim 1. Said coupling apparatus comprises a sleeve and a locking mechanism to hold two ends of the fiber-optic cables together for protection. In various embodiments, the sleeve covers spliced ends of the fiber-optic cables, while the locking mechanism seals the sleeve from outside pollutants or intrusions. Each site or campus interconnection may be achieved by robotic cross-connect platforms that allow for simultaneous moves and adds for fiber-optic cross-connects within a five-minute window. A fiber optic distance window tolerance of one to sixty-five miles is maintained to reduce optical latency and allow the use of low-cost optics for telecommunications transmission. A point of presence (POP) in either a single or dual configuration allows for the 100,000 plus strand count fiber optic system to be terminated in an existing telecommunications market for the handoff of traffic from the two or more datacenters to other parties. Additionally, telecommunications providers may be able to connect at each data center to pass traffic to other markets and undersea cable systems for datacenter tenants.

This Overview is provided to introduce a selection of concepts in a simplified form that are further described below in the Detailed Description.

While multiple embodiments are disclosed, still other embodiments of the present technology will become apparent to those skilled in the art from the following detailed description, which shows and describes illustrative embodiments of the disclosure. As will be realized, the technology is capable of modifications in various aspects, all without departing from the scope of the appended claims. Accordingly, the drawings and detailed description are to be regarded as illustrative in nature and not restrictive.

### BRIEF DESCRIPTION OF THE DRAWINGS

Embodiments of the present technology will be described and explained through the use of the accompanying drawings in which:
Figure 1 illustrates an exemplary system architecture;
Figure 2 is a flowchart illustrating a series of steps of operating an orchestration engine;
Figure 3 illustrates an exemplary operational environment for orchestrating datacenter workflows;
Figure 4 illustrates an exemplary system architecture in which some embodiments of the present technology may be utilized;
Figures 5A and 5B illustrate cross-section views of a fiber-optic communication bundle in accordance with some embodiments of the present technology;
Figures 6A, 6B, 6C, 6D, 6E, and 6F illustrate a coupling apparatus and pull-plate apparatus for fiber-optic telecommunications bundles in accordance with some embodiments of the present technology;
Figures 7A, 7B, 7C, and 7D illustrate a series of steps to use a coupling apparatus with a fiber-optic communication bundle in accordance with some embodiments of the present technology;
Figure 8 is a flowchart illustrating a mode of operations of an orchestration system; and
Figure 9 illustrates an example of a computing system.

The drawings have not necessarily been drawn to scale. Similarly, some components and/or operations may be separated into different blocks or combined into a single block for the purposes of discussion of some of the embodiments of the present technology. Moreover, while the technology is amenable to various modifications and alternative forms, specific embodiments have been shown by way of example in the drawings and are described in detail below. The intention, however, is not to limit the technology to the particular embodiments described. On the contrary, the technology is intended to cover all modifications and alternatives falling within the scope of the technology as defined by the appended claims.

### DETAILED DESCRIPTION

In some embodiments, multiple datacenter sites or campuses may be located geographically and physically close to each other, wired together by over a hundred thousand strands of fiber-optic communication cables. Fiber interconnection at each campus head end may be achieved using robotic cross-connect platforms that may allow for simultaneous moves and adds for fiber cross-connects within a five-minute window. Such robotic cross-connect platforms may include a multiplexer or switching unit that may uncouple one bundle of fiber-optic cables or one strand of cable of a bundle to redirect data from one datacenter to another, for example. This may occur based on power or capacity limitations at one datacenter to allow data transfer to another to complete a job. A fiber-optic distance window tolerance of 1 to 65 miles is maintained to reduce optical latency and allow the use of low-cost optics for telecommunications transmission. Each campus may be fed by grid power paths or renewable energy sources that are unique to that campus to help prevent the failure of more than one campus from the same power line outage.

In an instance, a fiber-optic bundle coupling apparatus is provided. The apparatus comprises a first coupling end, wherein the first coupling end encapsulates a first fiber-optic bundle of at least 100,000 fiber-optic cables inserted into a strand separator and surrounded by a first rubber sleeve. The apparatus also comprises a second coupling end, wherein the second coupling end encapsulates a second fiber-optic bundle of at least 100,000 fiber-optic cables surrounded by a second rubber sleeve. And the apparatus further comprises a locking mechanism, wherein the first fiber-optic bundle and the second fiber-optic bundle are spliced together and the first coupling end and the second coupling end are mated to cover spliced areas of the first and second fiber-optic bundles.

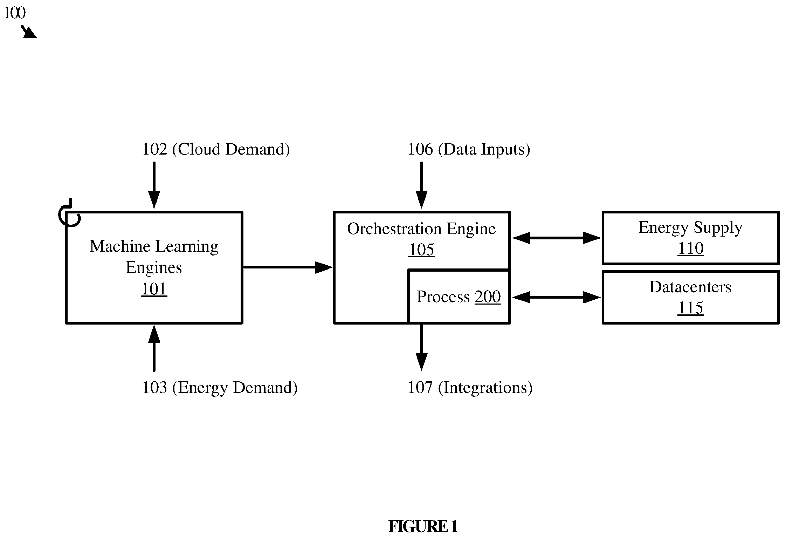

Turning now to the Figures, Figure 1 illustrates an exemplary system architecture. Figure 1 includes architecture 100 which further includes machine learning engines 101, orchestration engine 105, energy supply 110, and data centers 115. Machine learning engines 101 intake cloud demand 102 and energy demand 103 and pass data to orchestration engine 105. Orchestration engine 105 also ingests data inputs 106 and executes process 200 to create a datacenter orchestration plan that can be passed to energy supply 110, datacenters 115, and integrations 107. It may be appreciated that architecture 100 can be applied in multi-tenant or single-tenant datacenter environments.

In operation, machine learning engines 101 comprise machine learning models, such as reflective, responsive, and predictive models, configured to analyze historical and current data regarding cloud-computing jobs and internet utilization, weather, news, energy consumption and reliability, and more. Machine learning engines 101 obtain such information via cloud demand 102 and energy demand 103, among other databases or repositories. Cloud demand 102 can provide information on a datacenter's workload, capacity, previous and current scheduling, and the like. More specifically, cloud demand 102 can indicate each tenant of the datacenter and the tenant's workload, capacity, priority, and more. Accordingly, machine learning engines 101 can identify issues or availability of the datacenter, and further, they can predict future availability or upticks in demand. Similarly, energy demand 103 provides information on energy grids available for use by the datacenter. These could include renewable and non-renewable energy sources. Energy demand 103 may indicate how much energy is being used currently, previous energy usage history, available energy supplies, and the like.

Machine learning engines 101 can also connect with other sources to determine impacts to cloud demand 102 and energy demand 103. For example, machine learning engines 101 can identify inclement weather in areas, which may lead to power outages or an increase in energy usage. In another example, machine learning engines 101 can predict an increase in cloud-computing jobs due to foreseeable online shopping or other Internet traffic increases.

Machine learning engines 101 can communicate, via a number of wireless or wired communication links, the reflective, responsive, and predictive outputs to orchestration engine 105. Orchestration engine 105 may be one or more orchestration layers configured to execute on software, hardware, or any combination thereof. As such, orchestration engine 105 can include layers to project cloud demand, energy supply, energy storage optimization, and other real-time microservices. In addition to outputs from machine learning engines 101, orchestration engine 105 can also receive data inputs 106 comprising information related to an application requesting a datacenter workflow policy, user inputs, graphical user interface inputs, and the like. In an instance, user inputs can influence the orchestration policy to be created by orchestration engine 105. For example, a user can make selections of energy sources or datacenter locations to use to complete compute jobs. Orchestration engine 105, using each input, can then generate a datacenter orchestration policy that governs datacenter workflows and scheduling of compute jobs based on the supply and demand of cloud-computing resources and energy, among other things.

In various embodiments, the datacenter orchestration policy can dictate where each cloud-computing job is performed (i.e., between datacenters or within a single datacenter), by which equipment in a datacenter, and at what times. The datacenter orchestration policy can also determine which energy supply 110 to use for certain jobs. This policy can provide various benefits, such as efficient use of processing power available at datacenter(s), reduced processing time, optimal and cost-effective energy usage, environmental protection via renewable energy usage, and more. Orchestration engine 105 can then communicate the datacenter orchestration policy downstream to each of integrations 107, energy supply 110, and datacenters 115. It may be appreciated that the datacenter orchestration policy can be stored locally or in a cloud environment and communicated elsewhere via communication links, such as application programming interfaces. For example, the policy can be communicated to third party applications or other cloud integrations via integrations 107.

Energy supply 110 can refer to an energy storage mechanism, a utility substation, or any combination thereof. The datacenter orchestration policy can indicate which energy source to use, the timing of energy usage, and/or whether to store energy by some mechanism (i.e., batteries) for future use. Energy supply 110 can include any type of energy supply including both renewable and non-renewable energy sources. In various embodiments, the datacenter orchestration policy can recommend renewable energy sources in place of non-renewable energy sources to conserve natural resources, reduce costs, and/or use green energy, among other reasons.

Datacenters 115 can include multi-site, interconnected datacenters, distributed datacenters, or a single datacenter configured to intake cloud-computing jobs from one or more datacenter tenants, process the jobs, and output results to an end-user/tenant. The datacenter orchestration policy provided by orchestration engine 105 can indicate a potential routing and schedule of jobs to be performed at datacenters 115. In some instances, an end-user or tenant may update, accept, or reject the datacenter orchestration policy. It may be appreciated that energy supply 110 can feed power to datacenters 115 in order to function according to the datacenter orchestration policy.

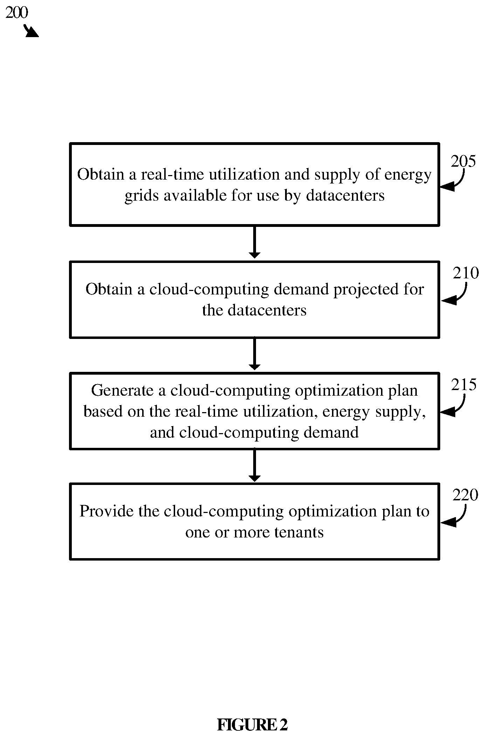

Figure 2 is a flowchart illustrating a series of steps of operating an orchestration engine. Figure 2 includes process 200, each operation noted parenthetically in the discussion below and which reference elements of Figure 1. It may be appreciated that process 200 can be implemented on software, hardware, or any combination thereof. For example, process 200 can be executed on or by orchestration engine 105 of Figure 1.

In operation 205, machine learning engines 101 obtain (205) at least a real-time utilization of energy grids and an available energy supply of the energy grids (i.e., energy demand 103) for use by datacenters over a period of time. The energy grids can be renewable and/or non-renewable energy sources that provide metrics on current usage, historical usage, and/or projected usage for a timeframe. The energy grids can also indicate a percentage of usage distributed for various uses. Of the uses, the energy grids may indicate how much energy can be used by one or more datacenters.

Next, in operation 210, machine learning engines 101 obtain (210) a cloud-computing demand (i.e., cloud demand 102) projected for the datacenters during the period of time. Machine learning engines 101 can use reflective, responsive, and/or predictive machine learning models to analyze historical resource demand, current demand, and projected demand for a timeframe. In instances where the machine learning engines 101 determine that, historically, high demand occurs at a certain time of day/month/year, the machine learning engines 101 can compare the current demand and project whether it will increase or decrease and require additional or fewer resources, respectively.

In operation 215, orchestration engine 105 generates (215) a cloud-computing optimization plan based at least on the real-time utilization of the energy grids, the available energy supply, and the cloud-computing demand, wherein the cloud-computing optimization plan identifies a cloud-computing job schedule and one or more energy grids of the energy grids available to perform cloud-computing jobs. Accordingly, an orchestration plan generated by orchestration engine 105 can at least route and/or re-route cloud-computing jobs to different datacenters (or different parts of a datacenter) and use and/or switch between energy sources during the time that the cloud-computing jobs are being performed.

For example, orchestration engine 105 may determine that electricity has a high-cost during the time that resources are required to perform compute jobs, while wind-turbine energy has an abundance of energy available that the datacenter can use. Use of renewable energy supplies can lead to cost-savings and/or environmental savings, among other benefits. As such, orchestration engine 105 or a tenant of a datacenter can choose to use power from the latter to perform the jobs more cost-effectively. In another example, the datacenters may be overloaded with cloud-computing jobs during a night, yet the machine learning engines 101 determine that capacity will become available during certain stretches of the night and following morning. Accordingly, orchestration engine 105 can generate a schedule and routing plan for certain jobs to be performed during different stretches where the jobs can be performed effectively and efficiently. In such examples, orchestration engine 105 can consider various aspects of the cloud-computing jobs, such as required processing power, job duration, priority, customer/client, and the like to schedule the jobs appropriately. More specifically, if a lengthy compute job requires significant processing capacity and time to complete, orchestration engine 105 can schedule the job according to either the cloud demand projection or the energy grid availability and cost, or some combination thereof.

Lastly, in operation 220, orchestration engine 105 provides (220) the cloud-computing optimization plan to one or more tenants. Orchestration engine 105 can communicate with third party applications via communication links, such as application programming interfaces. The applications can comprise integrations for datacenter operators, customers or tenants of the datacenter(s), utilities operators, and more to interact with the cloud-computing optimization plan and aspects of the process described herein.

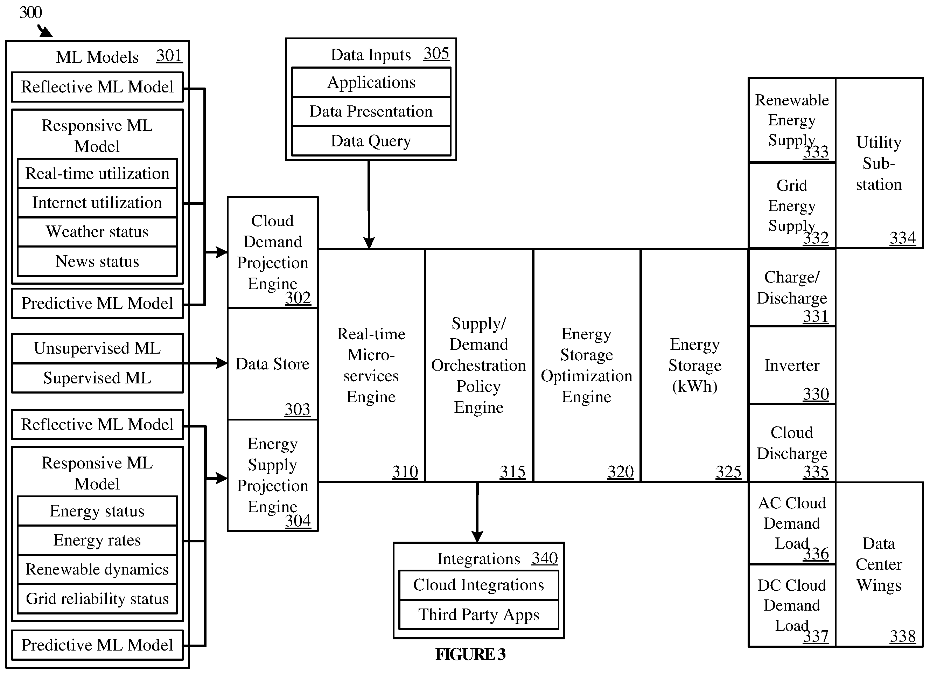

Moving to Figure 3, Figure 3 illustrates an exemplary operational architecture for orchestrating datacenter workflows. Figure 3 includes architectural environment 300 which further includes machine learning (ML) models 301, cloud demand projection engine 302, data store 303, energy supply projection engine 304, data inputs 305, real-time microservices engine 310, supply and demand orchestration policy engine 315, energy storage optimization engine 320, energy storage 325, inverter 330, energy charge/discharge apparatus 331, grid energy supply 332, renewable energy supply 333, utility substation 334, cloud demand discharge 335, AC cloud demand load 336, DC cloud demand load 337, datacenter wings 338, and integrations 340. Architectural environment 300 serves to optimize cloud demand, energy supplies, and energy storage by factoring in various energy loads, computing traffic, and supply and demand of each, among other things while employing a cross-section of hardware, software, firmware, and the like as one example of an operating architectural environment that may be used at one or more datacenter sites, such as illustrated in Figure 1.

ML models 301 comprise at least a reflective ML model, predictive ML model, responsive ML model, supervised ML model, and unsupervised ML model. In some embodiments reflective, predictive, and responsive ML models are input to cloud demand projection engine 302. Likewise, each of the aforementioned ML models may also be input into energy supply projection engine 304. Data store 303 may use both supervised and unsupervised ML models as data input. Responsive ML models may include data points on real-time cloud utilization, internet traffic and utilization, weather status, news status, energy status, energy rates, renewable energy dynamics and usage, and grid reliability status, among other things. Predictive ML models may include projected information regarding cloud computing and energy demand, usage, and status. Likewise, reflective ML models may use similar data or types of data to orchestrate plans that learn from previous jobs or events.

Using ML models as inputs, cloud demand engine 302, data store 303, and energy supply projection engine 304 may compile the information collected by the one or more ML models to project cloud computing demand, store additional data, and project energy supplies, respectively. Data store 303 may function as a repository for additional data, and it may be accessed locally, remotely, or over a cloud integration, in some embodiments. Next, real-time microservices engine 310 may use data from cloud demand projection engine 302 and energy supply projection engine 304 along with data inputs 305 to gauge current usage and system needs. Data inputs 305 may include applications, data presentation, and data query.

Energy storage optimization engine 320 utilizes energy storage 325, inverter 330, energy charge/discharge apparatus 331, grid energy supply 332, renewable energy supply 333, utility substation 334, cloud demand discharge 335, AC cloud demand load 336, DC demand load 337, and datacenter wings 338 to build an optimal plan to run as part of the overall orchestration plan. In turn, energy storage 325 may operate based on energy storage optimization engine 320. Energy storage 325 may include one or more batteries, generators, and/or other energy storage apparatuses or mechanisms. Energy storage 325 may be fed by grid energy supply 332, renewable energy supply 333, and utility substation 334 that each use energy charge/discharge apparatus 331 and inverter 330 to convert existing energy into stored energy. Grid energy supply 332 may be an existing, local power path from an electrical grid, while renewable energy supply 333 may be one of many types of renewable energy sources. Meanwhile, energy storage 325 may also be fed by AC cloud demand load 336, DC cloud demand load 337, and datacenter wings 338 that each uses cloud demand discharge 335 and inverter 330 to convert energy into the correct form for storage. Based on a supply of energy and a stored amount of energy, energy storage optimization engine 320 may generate a plan to utilize some energy and conserve other energy based on cloud demand and energy supplies.

Upon generating energy storage optimization engine 320, supply and demand orchestration policy engine 315 may provide operational workflows for one or more datacenters based on input from the ML models 301, real-time microservices engine 310, and energy storage optimization engine 320. Supply and demand orchestration policy engine 315 may dictate commands to a system, computing apparatus, or the like to schedule computing jobs, reroute computing jobs, employ the use of specific energy sources over others, and the like to maintain energy and job efficiency in the datacenter. Supply and demand orchestration policy engine 315 may then communicate commands or a plan to integrations 340 that further includes cloud integrations and third-party applications. Communication to integrations 340 may be completed over a secure file transfer protocol, application programming interface, or any number of calls that need not be explained for the sake of brevity.

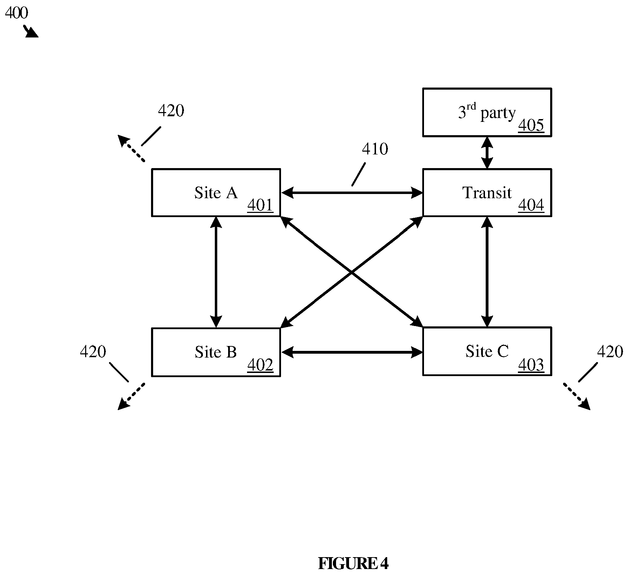

Figure 4 illustrates an exemplary operational environment 400 in which some embodiments of the present technology may be utilized. Figure 4 demonstrates operational environment 400 which further includes site A 401, site B 402, site C 403, transit 404, 3^{rd} party 405, fiber-optic bundles 410, and telecommunications lines 420. Operational environment 400 may be comprised of a mix of hardware, software, firmware, vaporware, and the like. In the illustrated Figure 4, interconnected multi-site datacenters use grid energy to operate while data-loading between each other by using fiber-optic cables that connect each site together. Each site may securely upload data to a cloud or other external network to communicate with other datacenters or third party applications.

In accordance with some embodiments, site A 401, site B 402, and site C 403 comprise datacenters capable of performing computing jobs. Each site may obtain power from a grid or renewable energy sources independently of one another. For example, site A 401 may connect to a local electric grid, site B 402 may be powered by solar cells, and site C 403 may be powered by wind turbines. Alternatively, each site of the three sites may utilize grid power but may use unique grid power paths as another way to prevent failure of more than one site from the same power line outage. The benefit of having independent sources of power helps mitigate power failures, so that one or more sites may continue operating during a power failure of one site's energy source. Transmission scale grid power may add uptime resiliency which may negate the need for traditional datacenter backup generators as well.

As illustrated in Figure 4, each of site A 401, site B 402, and site C 403, along with transit 404 and 3^{rd} party 405, may be interconnected by fiber-optic bundles 410. Fiber-optic bundles 410 comprise at least 100,000 strands of fiber-optic cables that may be spliced or coupled together. Each site may be interconnected by fiber-optic bundles 410 from one to 65 miles apart to help reduce latency and allow for low-cost optics for telecommunications transmissions. At an interconnection point at transit 404, a point of presence (POP) may exist in a single or dual configuration which allows fiber-optic bundles 410 to be terminated in an existing telecommunications market for a handoff of traffic from each datacenter site to other parties. Transit 404 may serve as an ingress/egress into and out of each site's network or a 3^{rd} party 405 network and may operate as a cloud network.

At each site, fiber-optic bundles 410 may be interconnected at each campus or site using robotic cross-connect platforms to allow for simultaneous moves and adds for fiber-optic connections within a five-minute window. The robotic cross-connect platforms may comprise a multiplexer, switching unit, or the like that allows fiber-optic bundles 410 to connect one site to another site for data transfer or another telecommunications transmission. By way of example, site A 401 may have an increased demand for computing jobs, while site C 403 may be underutilized. A switching unit may then connect fiber-optic bundles 410 from site A 401 to connect to site C 403 to reroute data from one to the other, respectively. As another example, site A 401 may have high energy costs to perform a job, while site C 403 has lower energy costs to complete the same job. Thus, a job may be rerouted to save costs and time using switching unit or robotic cross-connect platforms.

From each site of the three sites, telecommunications lines 420 may allow the passage of traffic to other markets. Some telecommunications lines 420 may be undersea cable systems, depending on geographic location, to provide data to tenants of the datacenter campuses.

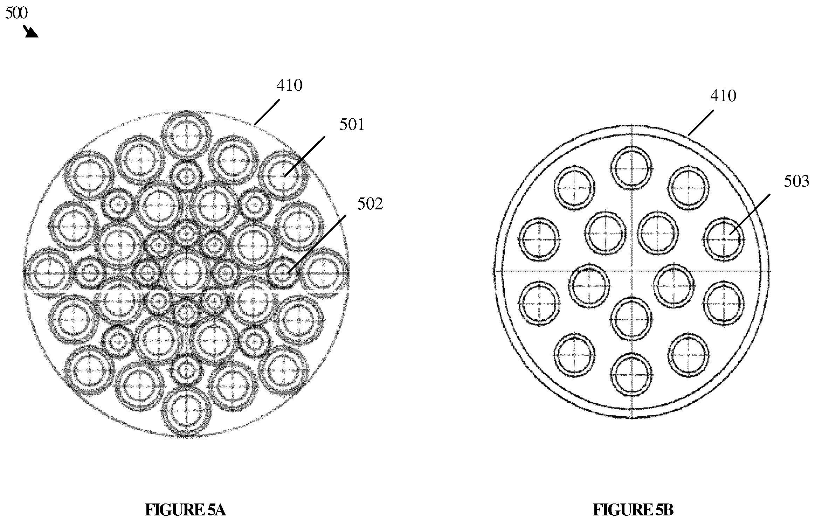

Moving to Figures 5A and 5B, both Figures illustrate a cross-section view of a fiber-optic communication bundle in accordance with some embodiments of the present technology. Fiber-optic bundles 410, as demonstrated in Figure 4, may comprise at least 100,000 strands of fiber-optic cables. Inside a conduit housing the bundle, fiber-optic cables of varying diameter may be used to accomplish system objectives.

As demonstrated in Figure 5A, for example, fiber-optic bundles 410 may use a fiber-optic strand 501 and a fiber-optic strand 502 in various patterns and sizes to maximize space. The pattern used may resemble for a 41-way pattern of fiber-optic cable bundling. Using various sizes of strands may allow for a minimally sized conduit to house the bundle to lessen the environmental impact when installing the conduit underground or undersea, for example.

Similarly, Figure 5B demonstrates a cross-section view of fiber-optic bundles 110 that may use a single size fiber optic strand 503. In some embodiments, a 5.10 pattern may be used to accomplish such a pattern of fiber-optic cable bundling.

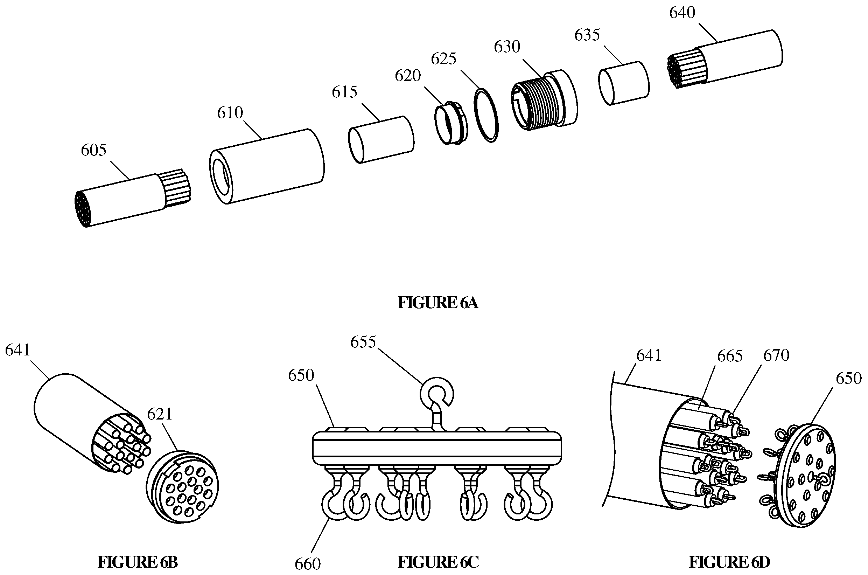

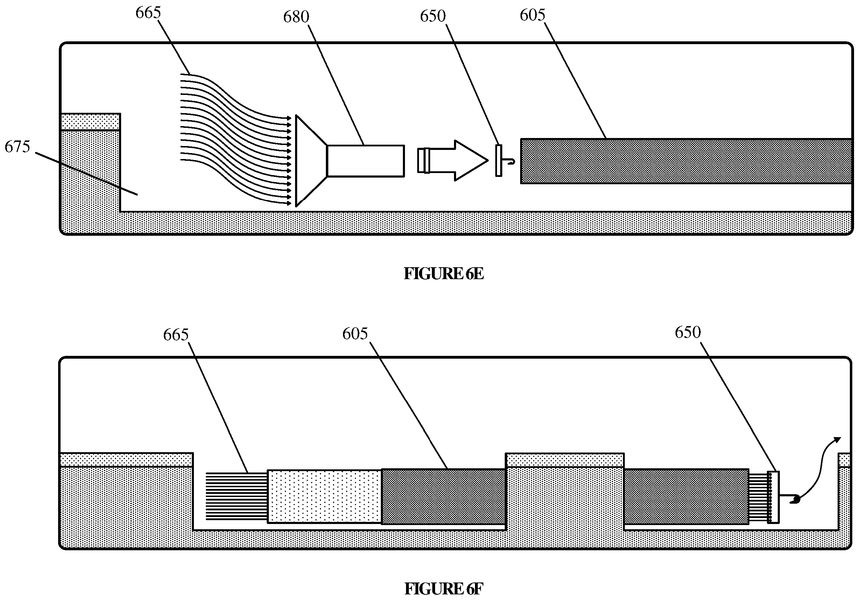

Next, Figures 6A, 6B, 6C, 6D, 6E, and 6F illustrate a coupling apparatus and pull-plate apparatus for fiber-optic telecommunications bundles in accordance with some embodiments of the present technology.

Figure 6A includes conduit A 605, coupling end A 610, rubber sleeve A 615, 41-way hybrid insert 620, rubber O-ring 625, coupling end B 630, rubber sleeve B 635, and conduit B 640. The coupling apparatus or device exemplified in Figure 6A may be employed to interconnect datacenter campuses and/or connect fiber-optic bundles together at various points, among other uses.

In various embodiments, conduit A 605 may comprise a fiber-optic cable bundle of 100,000 strands of cable, like fiber-optic bundles 110 as illustrated in Figure 1. Rubber sleeve A 615 may be inserted into coupling end A 610, and subsequently, conduit A 605 may be inserted into coupling end A 610 thereafter. Meanwhile, rubber sleeve B 635 may be inserted into coupling end B 630, rubber O-ring 625 may be placed over the grooves of coupling end B 630, and 41-way hybrid insert 620 may be inserted on the other end of coupling end B 630. Then, conduit B 640 may be inserted into coupling end B 630. Both conduit A 605 and conduit B 640 each have part of the coupling apparatus covering part of their respective fiber-optic bundle end.

Finally, the ends of conduit A 605 and conduit B 640 may be spliced together using one or more splicing methods. By way of example, given the large quantity of stands of fiber-optic cables in each bundle that may be spliced together, the conduits may be fusion spliced together by a machine. In other embodiments, the bundles may be spliced together using integrated robotics. In such examples, a large container may be used to house the spliced areas of bundles underground or above ground wherein robotics or other splicing machinery may be utilized to accomplish the splicing process.

Upon completion of the splicing process of conduit A 605 and conduit B 640, coupling end A 610 may be inserted, locked, screwed, twisted, mated, or the like into coupling end B 630 to ensure the coupling apparatus covers the spliced area of cables. Further, in some embodiments, an injectable resin or epoxy may be inserted into the coupling apparatus to ensure safety of the spliced cable bundles. Using such methods may also create air-tight, waterproof sections of spliced cables for protection from pollutants or water. Additionally, rubber O-ring 625 may provide additional safety from pollutants, air, or water.

Figure 6B demonstrates a conduit C 641 and rubber sleeve C 621 that may be used in place of conduit A 605, conduit B 640, and rubber sleeve B 620. The other illustrated pieces of coupling apparatus may be used interchangeably. Conduit C 641 and rubber sleeve 621 embody a different fiber-optic cable bundle that may use a 5.10 cable pattern for varying uses.

Figure 6C illustrates a view of a pull-plate apparatus that can be used to pull fiber-optic cables or conduits simultaneously. Figure 6C includes pull plate 650, pull hook 655, and cable hook 660. Pull plate 650 is designed to include a number of cable hooks 660 equivalent to the number of fiber-optic cables that need to be pulled through a conduit, pipe, or the like. In some embodiments, a swivel head or other hooking mechanism is inserted into a conduit to be attached to cable hook 660. Pull plate 650 also includes one or more of pull hook 655 used to pull on the other side of pull plate 650 and withstand a large weight of cables. In order to perform the pulling of cables, pull hook 655 may be attached to a winch or other mechanical device.

Figure 6D illustrates an isometric view of a pull-plate apparatus and a conduit of fiber-optic cables. Figure 6D includes conduit C 641, duct 665, swivel head 670, and pull plate 650. As shown, conduit 641 includes a number of duct 665 each comprising fiber-optic cables to be used in accordance with the present disclosure. Swivel head 670 is placed in duct 665 to pull duct 665 through conduit C 641. When swivel head 670 is placed in duct 665, pull plate 650 may hook onto each of swivel head 670 so that the pulling of each duct 665 is completed simultaneously, at the same speed.

Figures 6E and 6F illustrate an exemplary sequence of pulling ducts of fiber-optic cables through a conduit underground in accordance with some embodiments of the present disclosure. Figure 6E includes trench 675, duct 665, duct organizer 680, pull plate 650, and conduit A 605. Trench 675 resembles a piece of land that a conduit is placed in to run the telecommunications lines or cables. Once placed in trench 675, duct 665 is run through duct organizer 680, which functions to organize the fiber-optic cables so that they are organized in a pattern such as one demonstrated in Figure 2A or 2B, for example. In various embodiments, duct organizer 680 distributes each duct 665 into a 5/10 pattern. In other embodiments, duct organizer 680 distributes each duct 665 into a 41-way pattern, or some other pattern. After organizing the individual ducts, swivel heads are placed on each duct 665 so that pull plate 650 can be attached to duct 665 before entering conduit A 605. Then, as shown in Figure 6F, each of duct 665 is pulled simultaneously by pull plate 650 through conduit A 605. In some embodiments, pull plate 650 is attached to a winch or some other mechanical device to pull each duct 665 at the same speed and time.

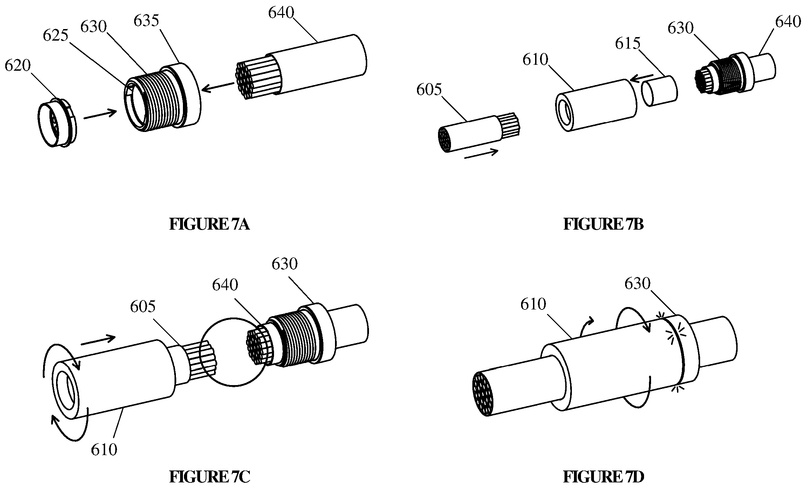

Figures 7A, 7B, 7C, and 7D illustrate a series of steps to use a coupling apparatus with a fiber-optic cable bundle in accordance with some embodiments of the present technology. Figures 7A, 7B, 7C, and 7D exemplify the coupling apparatus demonstrated in Figure 6 that includes conduit A 605, coupling end A 610, rubber sleeve A 615, 41-way hybrid insert 620, rubber O-ring 625, coupling end B 630, rubber sleeve B 635, and conduit B 640.

As demonstrated in Figure 7A, both 41-way hybrid insert 620 and conduit B 640 may be inserted into coupling end B 630. Coupling B 630 may comprise inserted rubber sleeve B 635 and rubber O-ring 625. Likewise, as demonstrated in Figure 7B, conduit A 605 and rubber sleeve A 615 may be inserted into coupling end A 610. Next, in Figure 7C, conduit A 605 and conduit B 640 may be spliced together by one or more splicing methods to create a single conduit of fiber-optic cables. Finally, in Figure 7D, coupling end A 610 and coupling end B 630 may be connected together or inserted one into the other to form the coupling apparatus. The coupling apparatus may be twisted to lock in place or use a similar locking mechanism to prevent the bundles from coming apart and to mitigate any entry of pollutants, air, or water into the spliced area. The coupling apparatus may be used as many times as necessary along the fiber-optic cable bundles to ensure interconnection between campuses and third parties, in accordance with embodiments of the present disclosure.

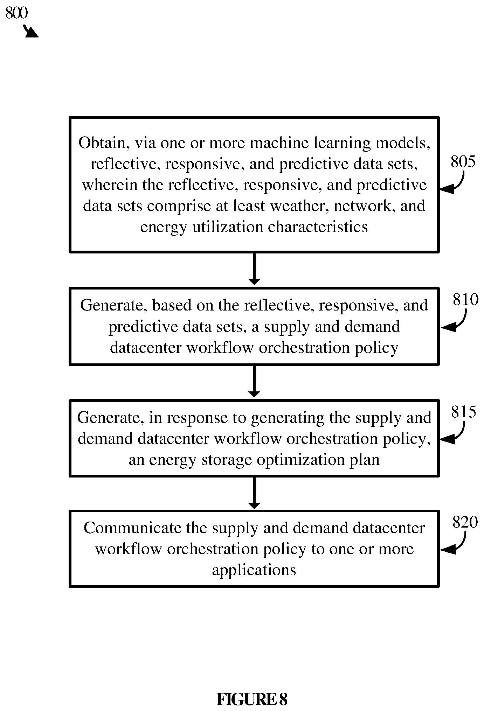

Figure 8 is a flowchart illustrating a mode of operations of an orchestration system. In the set of operations illustrated in Figure 8, data is obtained via ML modals to create an optimized cloud computing and energy storage plan. Figure 8 includes environment 800 which further includes data collection step 808, workflow generation step 810, energy optimization step 815, and communication step 820.

Beginning with the data collection step 805, a system, computer, computing apparatus, program, processor, or the like may obtain, via one or more machine learning models, reflective, responsive, and predictive data sets, wherein the reflective, responsive, and predictive data sets comprise at least weather, network, and energy utilization characteristics. In some embodiments, further characteristics may include, but are not limited to, internet utilization, news and weather status, energy status and rates, renewable dynamics, and grid reliability.

Next, at workflow generation step 810, the system may generate, based on the reflective, responsive, and predictive data sets, a supply and demand datacenter workflow orchestration policy. As an example, the supply and demand datacenter workflow orchestration policy may inform the system or a user of the system of optimal energy sources to employ to perform one or more specific computing jobs at a specific time in order to perform efficiently and effectively. To elaborate, the ML models may inform the system that a heat wave has caused an increased use of air conditioning in various parts of the globe, which in turn has spiked energy usage. Along with increased energy usage, the ML models may also determine that a significant amount of computing jobs has occurred frequently within this same timeframe. Thus, the system may choose a different energy source and/or reroute an incoming computing job to another location for better performance.

At energy optimization step 815, the system may generate, in response to generating the supply and demand datacenter workflow orchestration policy, an energy storage optimization plan. Building upon the aforementioned example, energy sources may be used to store energy in batteries or other means in preparation for high energy costs or usage elsewhere.

Lastly, at communication step 820, the system may communicate or implement the supply and demand datacenter workflow orchestration policy downstream to one or more applications, systems, computing apparatuses, or the like. In some embodiments, the orchestration policy may be communicated over a cloud integration. In other embodiments, the orchestration policy may be implemented in a local application or computing apparatus. Communication methods may include, but are not limited to, secure file transfer protocol, application programming interface, transfer via a computer-readable storage media, or the like.

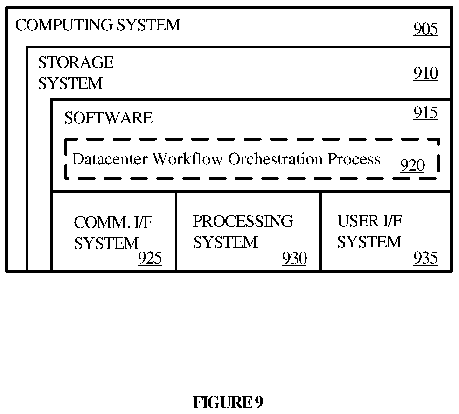

Figure 9 illustrates computing system 905 that is representative of any system or collection of systems in which the various processes, programs, services, and scenarios disclosed herein may be implemented. This computing system may be implemented in supply and demand orchestration policy engine 515 of Figure 5 to operate datacenter workflows and energy optimization. Examples of computing system 905 include, but are not limited to, desktop computers, laptop computers, server computers, routers, web servers, cloud computing platforms, and data center equipment, as well as any other type of physical or virtual server machine, physical or virtual router, container, and any variation or combination thereof.

Computing system 905 may be implemented as a single apparatus, system, or device or may be implemented in a distributed manner as multiple apparatuses, systems, or devices. Computing system 905 includes, but is not limited to, storage system 910, processing system 930, software 915, communication interface system 925, and user interface system 935. Processing system 930 is operatively coupled with storage system 910, communication interface system 925, and user interface system 935.

Processing system 930 loads and executes software 915 from storage system 910. Software 915 includes and implements datacenter workflow orchestration process 920, which is representative of the data collection and energy storage and optimization processes discussed with respect to the preceding Figures. When executed by processing system 930 to provide datacenter workflow orchestration processes, software 915 directs processing system 930 to operate as described herein for at least the various processes, operational scenarios, and sequences discussed in the foregoing implementations. Computing system 905 may optionally include additional devices, features, or functionality not discussed for purposes of brevity.

Referring still to Figure 9, processing system 930 may include a micro-processor and other circuitry that retrieves and executes software 915 from storage system 910. Processing system 930 may be implemented within a single processing device but may also be distributed across multiple processing devices or sub-systems that cooperate in executing program instructions. Examples of processing system 930 include general purpose central processing units, graphical processing units, application specific processors, and logic devices, as well as any other type of processing device, combinations, or variations thereof.

Storage system 910 may include any computer readable storage media readable by processing system 930 and capable of storing software 915. Storage system 910 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 910 may also include computer readable communication media over which at least some of software 915 may be communicated internally or externally. Storage system 910 may be implemented as a single storage device but may also be implemented across multiple storage devices or sub-systems co-located or distributed relative to each other. Storage system 910 may incorporate additional elements, such as a controller, capable of communicating with processing system 930 or possibly other systems.

Software 915 (including datacenter workflow orchestration process 920) may be implemented in program instructions and among other functions may, when executed by processing system 930, direct processing system 930 to operate as described with respect to the various operational scenarios, sequences, and processes illustrated herein. For example, software 915 may include program instructions for implementing any multi-site and/or multi-tenant datacenter workflows and processes as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 915 may include additional processes, programs, or components, such as operating system software, virtualization software, or other application software. Software 915 may also include firmware or some other form of machine-readable processing instructions executable by processing system 930.

In general, software 915 may, when loaded into processing system 930 and executed, transform a suitable apparatus, system, or device (of which computing system 905 is representative) overall from a general-purpose computing system into a special-purpose computing system customized to provide datacenter orchestration processes as described herein. Indeed, encoding software 915 on storage system 910 may transform the physical structure of storage system 910. The specific transformation of the physical structure may depend on various factors in different implementations of this description. Examples of such factors may include, but are not limited to, the technology used to implement the storage media of storage system 910 and whether the computer-storage media are characterized as primary or secondary storage, as well as other factors.

For example, if the computer readable storage media are implemented as semiconductor-based memory, software 915 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 925 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 905 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all of the following interpretations of the word: any of the items in the list, all of the items in the list, and any combination of the items in the list.

The above Detailed Description of examples of the technology is not intended to be exhaustive or to limit the technology to the precise form disclosed above. While specific examples for the technology are described above for illustrative purposes, various modifications are possible within the scope of the appended claims, as those skilled in the relevant art will recognize. For example, while processes or blocks are presented in a given order, alternative implementations may perform routines having operations, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the appended claims. As noted above, particular terminology used when describing certain features or aspects of the technology should not be taken to imply that the terminology is being redefined herein to be restricted to any specific characteristics, features, or aspects of the technology with which that terminology is associated.

## Claims

1. A fiber-optic bundle coupling apparatus, comprising:
a first coupling end (610) configured to encapsulate a first fiber-optic bundle (605) of at least 100,000 fiber-optic cables;
a first rubber sleeve (615) configured to be inserted into the first coupling end (610) and to surround the first fiber-optic bundle (605);
a second coupling end (630) configured to encapsulate a second fiber-optic bundle (640, 641) of at least 100,000 fiber-optic cables to be spliced together with the at least 100,000 fiber-optic cables of the first fiber-optic bundle (605);
a second rubber sleeve (635) configured to be inserted into the second coupling end (630) and to surround the second fiber-optic bundle (640, 641);
a strand separator (620, 621) configured to be inserted into an end portion of the second coupling end (630) facing the first coupling end (610), the strand separator comprising at least 100,000 openings corresponding to the at least 100,000 fiber-optic cables of the first fiber-optic bundle (605), wherein each of the fiber-optic cables of the at least 100,000 fiber-optic cables is configured to be inserted into a respective opening of the at least 100,000 openings of the strand separator (620, 621); and
a locking mechanism
configured to couple the first coupling end (610) and the second coupling end (630) to cover spliced areas of the first and second fiber-optic bundles after the first and second fiber-optic bundles being spliced together.

2. The fiber-optic bundle coupling apparatus of claim 1, wherein the fiber-optic cable openings of the strand separator are organized in a 41-way pattern.

3. The fiber-optic bundle coupling apparatus of claim 1, wherein the fiber-optic cable openings of the strand separator are organized in a 5.10 pattern.

4. A fiber-optic bundle of at least 100,000 fiber-optic cables comprising:
a first fiber-optic bundle (605) of at least 100,000 fiber-optic cables;
a second fiber-optic bundle (605) of at least 100,000 fiber-optic cables; and
a coupling apparatus according to any of claims 1-3, wherein the first fiber-optic bundle and the second fiber-optic bundle are spliced to create the fiber-optic bundle of at least 100,000 fiber-optic cables.

5. The fiber-optic bundle of claim 4, further comprising an injectable resin or epoxy inserted into the coupling apparatus to create a waterproof seal to protect the single fiber-optic bundle.

## Patentansprüche

1. Vorrichtung zur Kopplung von Glasfaserbündeln, umfassend:
ein erstes Kopplungsende (610), das konfiguriert ist, um ein erstes Glasfaserbündel (605) aus mindestens 100.000 Glasfaserkabeln zu kapseln;
eine erste Gummimanschette (615), die konfiguriert ist, um in das erste Kopplungsende (610) eingesetzt zu werden und um das erste Glasfaserbündel (605) zu umgeben;
ein zweites Kopplungsende (630), das konfiguriert ist, um ein zweites Glasfaserbündel (640, 641) aus mindestens 100.000 Glasfaserkabeln zu kapseln, die mit den mindestens 100.000 Glasfaserkabeln des ersten Glasfaserbündels (605) zusammenzuspleißen sind;
eine zweite Gummimanschette (635), die konfiguriert ist, um in das zweite Kopplungsende (630) eingesetzt zu werden und um das zweite Glasfaserbündel (640, 641) zu umgeben;
einen Strangseparator (620, 621), der konfiguriert ist, um in einen Endabschnitt des zweiten Kopplungsendes (630) eingesetzt zu werden, der dem ersten Kopplungsende (610) zugewandt ist, wobei der Strangseparator mindestens 100.000 Öffnungen umfasst, die den mindestens 100.000 Glasfaserkabeln des ersten Glasfaserbündels (605) entsprechen, wobei jedes der Glasfaserkabel der mindestens 100.000 Glasfaserkabel konfiguriert ist, um in eine jeweilige Öffnung der mindestens 100.000 Öffnungen des Strangseparators (620, 621) eingesetzt zu werden; und
einen Verriegelungsmechanismus
der konfiguriert ist, um das erste Kopplungsende (610) und das zweite Kopplungsende (630) zu koppeln, um gespleißte Bereiche des ersten und des zweiten Glasfaserbündels abzudecken, nachdem das erste und das zweite Glasfaserbündel zusammengespleißt worden sind.

2. Vorrichtung zur Kopplung von Glasfaserbündeln nach Anspruch 1, wobei die Glasfaserkabelöffnungen des Strangseparators in einem 41-Wege-Muster organisiert sind.

3. Vorrichtung zur Kopplung von Glasfaserbündeln nach Anspruch 1, wobei die Glasfaserkabelöffnungen des Strangseparators in einem 5.10-Muster organisiert sind.

4. Glasfaserbündel aus mindestens 100.000 Glasfaserkabeln, umfassend:
ein erstes Glasfaserbündel (605) aus mindestens 100.000 Glasfaserkabeln;
ein zweites Glasfaserbündel (605) aus mindestens 100.000 Glasfaserkabeln; und
eine Vorrichtung zur Kopplung nach einem der Ansprüche 1-3, wobei das erste Glasfaserbündel und das zweite Glasfaserbündel gespleißt sind, um das Glasfaserbündel aus mindestens 100.000 Glasfaserkabeln zu erzeugen.

5. Glasfaserbündel nach Anspruch 4, ferner umfassend ein injizierbares Harz oder Epoxid, das in die Vorrichtung zur Kopplung eingesetzt ist, um eine wasserfeste Abdichtung zu erzeugen, um das einzelne Glasfaserbündel zu schützen.

## Revendications

1. Appareil de couplage de faisceau de fibres optiques, comprenant :
une première extrémité de couplage (610) configurée pour encapsuler un premier faisceau de fibres optiques (605) d'au moins 100 000 câbles à fibres optiques ;
un premier manchon en caoutchouc (615) configuré pour être inséré dans la première extrémité de couplage (610) et pour entourer le premier faisceau de fibres optiques (605) ;
une seconde extrémité de couplage (630) configurée pour encapsuler un second faisceau de fibres optiques (640, 641) d'au moins 100 000 câbles à fibres optiques à épisser ensemble avec les au moins 100 000 câbles à fibres optiques du premier faisceau de fibres optiques (605) ;
un second manchon en caoutchouc (635) configuré pour être inséré dans la seconde extrémité de couplage (630) et pour entourer le second faisceau de fibres optiques (640, 641) ;
un séparateur de brins (620, 621) configuré pour être inséré dans une partie d'extrémité de la seconde extrémité de couplage (630) faisant face à la première extrémité de couplage (610), le séparateur de brins comprenant au moins 100 000 ouvertures correspondant aux au moins 100 000 câbles à fibres optiques du premier faisceau de fibres optiques (605), dans lequel chacun des câbles à fibres optiques des au moins 100 000 câbles à fibres optiques est configuré pour être inséré dans une ouverture respective des au moins 100 000 ouvertures du séparateur de brins (620, 621) ; et
un mécanisme de verrouillage
configuré pour coupler la première extrémité de couplage (610) et la seconde extrémité de couplage (630) pour couvrir des zones épissées des premier et second faisceaux de fibres optiques après que les premier et second faisceaux de fibres optiques ont été épissés ensemble.

2. Appareil de couplage de faisceau de fibres optiques selon la revendication 1, dans lequel les ouvertures de câble à fibres optiques du séparateur de brins sont organisées selon un motif à 41 voies.

3. Appareil de couplage de faisceau de fibres optiques selon la revendication 1, dans lequel les ouvertures de câble à fibres optiques du séparateur de brins sont organisées selon un motif 5.10.

4. Faisceau de fibres optiques d'au moins 100 000 câbles à fibres optiques comprenant :
un premier faisceau de fibres optiques (605) d'au moins 100 000 câbles à fibres optiques ;
un second faisceau de fibres optiques (605) d'au moins 100 000 câbles à fibres optiques ; et
un appareil de couplage selon l'une quelconque des revendications 1 à 3, dans lequel le premier faisceau de fibres optiques et le second faisceau de fibres optiques sont épissés pour créer le faisceau de fibres optiques d'au moins 100 000 câbles à fibres optiques.

5. Faisceau de fibres optiques selon la revendication 4, comprenant en outre une résine injectable ou un époxy inséré dans l'appareil de couplage pour créer un joint étanche afin de protéger le faisceau de fibres optiques unique.
